# EUROPÄISCHE PATENTSCHRIFT

(11) **EP 2 044 504 B1**
(45) Veröffentlichungstag und Bekanntmachung des Hinweises auf die Patenterteilung: **30.12.2009**
(21) Anmeldenummer: 07787853.6
(22) Anmeldetag: 24.07.2007
(51) Int. Cl.: G06F 3/048

(54) **VERFAHREN UND ANORDNUNG ZUM BEDIENEN VON ELEKTRISCHEN GERÄTEN**
METHOD AND ARRANGEMENT FOR THE OPERATION OF ELECTRIC DEVICES
PROCÉDÉ ET DISPOSITIF DE COMMANDE D'APPAREILS ÉLECTRIQUES

(30) Priorität: 25.07.2006 DE 102006034415
(43) Veröffentlichungstag der Anmeldung: 08.04.2009
(73) Patentinhaber: Siemens Enterprise Communications GmbH & Co. KG, 81379 München (DE)
(72) Erfinder: RÜSCHER, Gitta, 82152 Planegg (DE); TOUSSAINT, Claude, 80636 München (DE)
(74) Vertreter: Fritzsche, Thomas
(86) Internationale Anmeldenummer: PCT/EP2007/057618
(87) Internationale Veröffentlichungsnummer: WO 2008/012307

(56) Entgegenhaltungen:
- US-A1- 2003 081 011
- US-A1- 2003 084 087
- US-B1- 6 400 996

## Beschreibung

Für die Bedienung von elektrischen Geräten, insbesondere nachrichtentechnischen oder kommunikationstechnischen Geräten, sind bereits unterschiedliche Bedienungselemente wie Tasten, Schalter und auch Touchpads oder Touchscreens bekannt.

Aus der EP 0 517 942 B1 ist beispielsweise eine Anordnung von Tastelementen bekannt, mit deren Hilfe in Kommunikationsendgeräten, insbesondere Telefonen, die in der Anzeigeeinheit angezeigten, vom jeweiligen vermittlungstechnischen Zustand des Kommunikationsendgerätes abhängigen Funktionen ausgewählt bzw. gescrollt und anschließend durch Betätigen einer Folgetaste bzw. Bestätigungstaste initialisiert werden können.

Sollen in einem elektrischen Gerät mehrere von durch Menüs und den Menüebenen bzw. Unterebenen repräsentierte Funktionen oder Informationen ausgewählt und bedient werden, so können bei einem begrenzten Anzeigeumfang einer Anzeigeeinheit wie beispielsweise einem Display in einem Kommunikationsendgerät meist nicht alle im Kontext zu den bedienenden Funktionen übersichtlich dargestellt werden, wobei je nach Anwendung eine Anzeige mit vielen gedrängten Funktionen oder mit wenigen Funktionen gewählt wird.

Um übersichtliche Anzeigen auch bei mehreren Funktionen oder Informationen zu bewirken, werden die Grundfunktionen in einem Menü dargestellt und die den Grundfunktionen zugeordneten Funktionen in weiteren Menüebenen bzw. Unterebenen bzw. Pulldownmenüs oder Kontextmenüs dargestellt. Hierbei ist jedoch zu entscheiden, in welchem der Menüebenen bzw. Pulldown- oder Kontextmenüs die zugeordnete Funktion gefunden werden könnte. Nachdem durch Betätigen des zugeordneten Bedienelements beispielsweise einer Taste eine Entscheidung getroffen ist, wird das entsprechende Untermenü mit den zugeordneten Funktionen oder Informationen angezeigt. Da häufig die Zuordnung von Funktionen oder Informationen zu den Grundfunktionen nicht ersichtlich ist, kommt es häufig zu Fehlentscheidungen bzw. Fehlbedienungen und es muss durch Betätigen des Bedienelements in das Grund- oder Basismenüs oder in die vorhergehende Menüebene zurückgekehrt und eine neue Entscheidung getroffen werden, die jedoch erneut ein Fehlentscheidung sein kann.

Die der Erfindung zugrunde liegende Aufgabe besteht darin, die Anzeige von Menüs und weiteren Menüebenen zu verbessern. Die Aufgabe wird ausgehend von einem Verfahren zum Bedienen von elektrischen Geräten gemäß den Merkmalen des Oberbegriffs des Patentanspruchs 1 und 6 jeweils durch dessen kennzeichnende Merkmale gelöst.

Ein wesentlicher Aspekt des erfindungsgemäßen Verfahrens ist darin zu sehen, dass bei einer Annäherung eines Objekts - insbesondere der Finger einer Person - an das mit einem Näherungssensor ausgestatteten Bedienungselement oder Berühren des mit einem Berührungssensor ausgestatteten Bedienungselements durch ein Objekt in der Anzeige im Sinne einer Vorschau die durch das Bedienelement ausgewählte, weitere Menüebene angezeigt wird.

Ein wesentlicher Vorteil des erfindungsgemäßen Verfahrens ist darin zu sehen, dass die durch ein Bedienelement ausgewählten Funktionen bzw. Menüs oder weitere Menüebenen bzw. Unterebenen nicht sofort ausgewählt und angezeigt werden sondern durch einen Annäherungs- und/oder Berührungssensor eine Vorschau der Funktionen bzw. Menüs oder Untermenüs angezeigt wird, die bei Entfernen eines Objekts beispielsweise eines Finger einer Person wieder verschwindet und das ursprünglich dargestellte Menü bzw. Untermenüs automatisch wieder angezeigt wird. Hierdurch wird ein lästiges mehrfaches Betätigen der Bedienelemente bzw. werden mehrfache Fehlentscheidungen vermieden, wodurch bei den elektrischen Geräten der Bedienungskomfort erheblich erhöht wird und die Kundenakzeptanz verbessert wird. Durch die Vorschau der zugeordneten Funktion zu den weiteren Menüebenen bzw. Unterebenen können diese einfacher auf mehrere Ebenen aufgeteilt und übersichtlich dargestellt werden.

Eine erfindungswesentliche Weiterbildung ist darin zu sehen, dass im Sinne einer Vorschau die durch das Bedienelement auswählbare weitere Menüebene hinsichtlich Format und/oder Inhalt reduziert angezeigt wird. Hierdurch können die wesentlichen Funktionen oder nur die häufig benutzten oder von vermittlungstechnischen oder betriebstechnischen Zuständen abhängige wesentliche Funktionen der Unterebene im Sinne einer Vorschau angezeigt werden.

Weitere vorteilhafte Ausgestaltungen der Erfindung sind auf die Realisierung der Näherungs- oder Berührungssensoren bezogen. Nach einer Variante wird bei einem durch zumindest eine optische Sende-/ Empfangseinheit oder eine Ultraschall- Sende-/ Empfangseinheit ausgestalteten Näherungssensor (NSO) ein jeweils durch die optischen Sendeeinheit ausgesandtes optisches Signal oder durch die Ultraschall- Sendeeinheit ausgesandtes Ultraschallsignal durch Annäherung eines Objekts (F) an die Sende-/ Empfangseinheit das reflektierte optische Signal oder Ultraschallsignal im Empfänger erfasst und durch das Erfassen wird eine weitere Menüebene (WM) ausgewählt - Anspruch 3. Nach einer weiteren Variante wird bei einem kapazitiven Näherungssensor durch Annäherung eines Objekts eine Oszillatorschwingung beeinflusst und die Beeinflussung erfasst und eine dem jeweiligen Bedienelement zugeordnete, weitere Menüebene ausgewählt. Es sind prinzipiell bei der Erfindung alle Näherungssensoren einsetzbar, wobei diese in Bedienelemente wie beispielsweise Tasten integrierbar sein sollen.

Vorteilhafte Weiterbildungen des erfindungsgemäßen Verfahrens sowie eine Anordnung zum Bedienen eines elektrischen Geräts mit weiteren Ausgestaltungen sind den weiteren Patentansprüchen zu entnehmen.

Im Folgenden wird die Erfindung anhand von drei zeichnerischen Darstellungen näher erläutert. Dabei zeigen
- Figur 1: ein elektrisches Gerät mit den erfindungswesentli- chen Komponenten,
- Figur 2: in einem Ablaufdiagramm das erfindungsgemäße Ver- fahren und in
- Figur 3: in einem Beispiel die mit dem erfindungsgemäßen Verfahren angezeigten Informationen und Funktionen in einer Anzeigeeinheit eines Telefons.

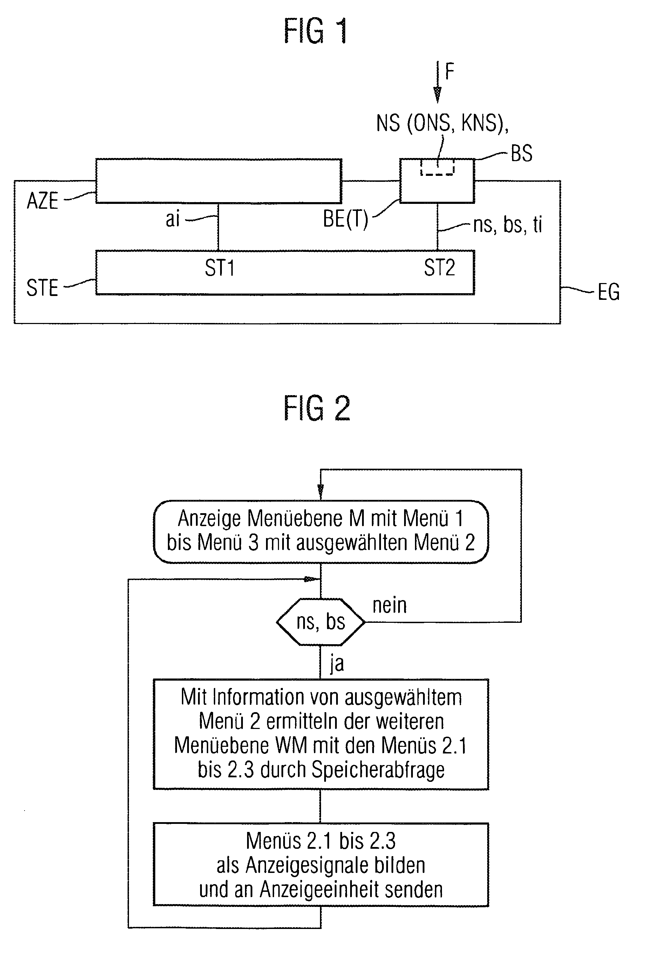

Figur 1 zeigt in einer schematischen Darstellung ein elektrisches Gerät EG, in dem nur die Anordnung der das erfindungsgemäße Verfahren realisierenden Komponenten dargestellt ist, wobei nur ein Bedienelement BE von meist mehreren Bedienelementen eines elektrischen Geräts angezeigt ist. Die dargestellten Komponenten sind eine Anzeigeeinheit AZE, ein Bedienelement BE sowie eine Steuereinheit STE, wobei das Bedienelement BE und die Anzeigeeinheit AE mit der Steuereinheit STE verbunden sind.

Die Anzeigeeinheit AZE ist häufig durch eine LCD- Anzeigeeinheit realisiert und ist für die Anzeige von Menüebenen und weiteren Menüebenen bzw. Unterebenen vorgesehen. Den Menüebenen sind initiierbare Funktionen und/oder eingegebenen Informationen zugeordnet. Alternativ kann die Anzeigeeinheit AZE durch kostengünstige organische Leuchtdiode- Anzeigen oder kurz OLED- Anzeigen realisiert werden. Auch eine Realisierung mit elektronischem Papier mit E-Ink-Technologie ist alternativ möglich, wobei hierdurch ein großer Blickwinkelbereich erreicht wird.

Das Bedienelement BE ist beispielsweise durch eine mechanische Taste T realisiert, jedoch sind andere Realisierungen wie elektronische Tasten oder Touchscreen- Tasten möglich. Erfindungsgemäß ist das Bedienelement BE bzw. die Taste T bei einer erfindungsgemäßen Ausgestaltung mit einem Näherungssensor NS ausgestattet.

Als Näherungssensor NS sind unterschiedliche Realisierungsvarianten möglich. Gemäß einer ersten Variante ist das Bedienelement BE bzw. die Taste T mit einem optischen Näherungssensor ONS ausgerüstet, wobei der optische Näherungssensor ONS durch eine optische Sende-/Empfangseinheiten realisiert ist - in Figur 1 durch ein gestricheltes Rechteck angedeutet. Eine derartige optische Sende-/Empfangseinheit ist beispielsweise durch eine optisch Infrarotsende-/ Empfangseinheit realisiert, wobei die optische Sendeeinheit beispielsweise ein Infrarotsignal aussendet und die optische Empfangseinheit beispielsweise bei Annäherung eines Fingers F einer Person den reflektierten Anteil des gesendeten Infrarotsignals empfängt. Die Sende- und Empfangseinheit ist zur Erleichterung der Reflektion und des Empfangs des reflektierten, ausgesandten Infrarotsignals hierzu derart angeordnet, dass das Infrarotsignal schräg zur Bedienseite des Bedienelements ausgesandt und empfangen wird - nicht dargestellt. Die optische Sende-/ Empfangseinheit ist in einer Ausnehmung des Bedienelements BE bzw. der Taste T derart angeordnet, dass das Infrarotsignal in Richtung Bedienseite des Bedienelements BE ausgesandt wird.

Wird ein Pegel eines reflektierten, empfangenen optischen Infrarotsignals erreicht bzw. überschritten, wird ein Näherungssignal ns gebildet und an die Steuereinheit STE übertragen. Als weitere Sensortechnologie kann die Ultraschalltechnologie verwendet werden, wobei die Arbeitsweise analog zur optischen Sensortechnologie ist, jedoch anstelle des optischen Signals ein Ultraschallsignal verwendet wird - nicht dargestellt.

Gemäß einer weiteren Variante ist das Bedienelement BE bzw. die Taste T mit einem kapazitiven Näherungssensor KNS ausgerüstet, bei dem eine Oszillatorschwingung durch die Annäherung beispielsweise eines Fingers einer Person beeinflusst wird. Dies wird dadurch bewirkt, dass durch das angenäherte Objekt bzw. den Finger F die im Oszillator wirksame Kapazität verändert und damit die Frequenz der im Oszillator erzeugten Schwingungen verändert wird. Die Änderung der Frequenz wird erfasst und bei einer vorgegebenen Äderung der Frequenz bzw. bei einer vorgegebenen Annäherung eines Objekt bzw. des Fingers F wird ein Näherungssignal ns erzeugt und an die Steuereinheit STE übertragen - in der Figur 1 durch eine mit ns bezeichnete Linie angedeutet.

Gemäß einer weiteren Variante der Erfindung kann das Bedienelement BE bzw. die Taste T auch mit einem als resistiven oder kapazitiven Touch Screen ausgebildeten Berührungssensor BS ausgestattet sein, wobei bei einer Berührung des Touch Screen durch Objekte beispielsweise durch den Finger F einer Person die Berührung erfasst wird und ein Berührungssignal bs an die Steuereinheit STE übertragen wird - in der Figur 1 durch eine mit bs bezeichnete Linie angedeutet.

Mit der mechanischen Taste T bzw. der Bedieneinheit BE wird durch mechanisches Betätigen ein Tastensignal ti gebildet und ebenfalls an die Steuereinheit STE übermittelt. Das Tastensignal ti kann über eine separate Verbindung oder über eine gemeinsame Verbindung zusammen mit dem Näherungssignal ns oder Berührungssignal bs übertragen werden.

Die Steuereinheit STE ist vorteilhaft durch ein Mikroprozessorsystem mit einem Programmspeicher und beispielsweise mit zwei Schnittstellen ST1,ST2 für den Anschluss der Bedienenheit BE und der Anzeigeeinheit AZE gebildet. Auch eine gemeinsame serielle oder parallele Schnittstelle in Prozessorsystemen kann eingesetzt werden - nicht dargestellt. In der Steuereinheit STE wird das erfindungsgemäße Verfahren gesteuert, d.h. in Abhängigkeit von den vom Bedienelement BE übertragenen Signal ns,bs,ti wird die Anzeigeeinheit AZE gesteuert bzw. werden Anzeigesignale as bebildet und an die Anzeigeeinheit AZE übertragen und dort angezeigt.

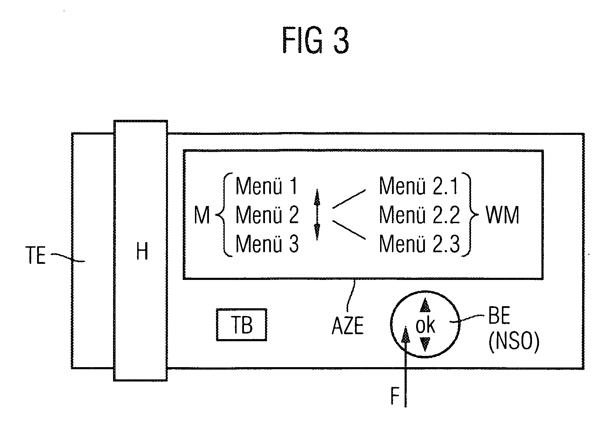

Das in der Steuereinheit STE durch Programm bzw. Software realisierte Verfahren wird anhand des in Figur 2 dargestellten Ablaufdiagramms und für ein als Endgerät eines Kommunikationsnetzes realisiertes elektrisches Gerät EG näher erläutert - siehe auch Figur 3.

Hierbei stellt das Endgerät in Figur 3 ein Telefon TE dar, das in üblicher weise angeordnet eine Hör/ Sprechgarnitur H, ein Tastenfeld TB und eine Anzeigeeinheit AZE aufweist. Das Telefon TE ist zusätzlich neben dem Tastenfeld TB mit einer erfindungsgemäßen Bedieneinheit BE ausgestattet. Die Tasten des Tastenfeldes TB dienen insbesondere für eine Rufnummerneingabe bzw. Eingabe einer Adresse für einen Verbindungsaufbau zu einem weiteren Endgerät über ein Kommunikationsnetz, beispielsweise das Telefonnetz oder das Internet - nicht dargestellt. Die Anzeigeeinheit AZE ist üblicherweise durch eine LCD-Anzeigeeinheit realisiert und ist für die Anzeige der eingegebenen Informationen und auch für eine Anzeige von zusätzlichen Informationen und Funktionen vorgesehen.

Das Anzeigeelement AZE kann auch mit Hilfe anderer Anzeigetechnologien wie beispielsweise segmentierte, lumineszierende Folien oder LCD- Anzeigen realisiert sein, wobei die Anzeigeeinheit AZE derart ausgestaltet ist, dass Menüs und Menüebenen bzw. Unterebenen angezeigt werden können. Ein Menü bzw. eine Menüebene ist meist durch mehrere Informationen gebildet, die die jeweils in einer Zeilen dargestellt sind. Den Informationen sind beispielsweise Funktionen zugeordnet oder Funktionen repräsentieren Informationen, die angezeigt werden und aus denen eine für eine Weiterverarbeitung in einem elektrischen Gerät GE ausgewählt wird.

Die Bedieneinheit BE ist beispielsweise durch eine Kombination von Tasten realisiert, wobei zwei Tasten für das Scrollen in auf der Anzeigeeinheit AZE angezeigten Menüs vorgesehen sind - in Figur 3 durch zwei Pfeile angedeutet -, die die Scrollrichtung anzeigen. Bei Betätigen der dritten Taste wird das mit den Scrolltasten ausgewählte Menü bzw. die Menüebene aktiviert bzw. wird die nächste bzw. weitere Menüebene angezeigt - in Figur 3 durch die Bezeichnung ok angedeutet. Betätigt werden die drei Tasten über eine runde Abdeckung, auf der über den Tasten die beiden Pfeile und die Bezeichnung ok aufgebracht sind. Durch Drücken auf einen Bereich der Abdeckung, auf dem die beiden Pfeile angeordnet, wird eine der beiden Tasten betätigt und durch ein erzeugtes Tastensignal mit Hilfe der Steuereinheit STE in der Anzeige beispielsweise ein nicht dargestellter Cursor von einer Menüebene zu einer weiteren Menüebene gesteuert und dadurch angezeigt, welche der Menüebenen aktuell ausgewählt ist - in der Figur 3 durch einen Doppelpfeil in der Anzeigeeinheit AZE angedeutet. Durch Drücken auf den Bereich der Abdeckung mit der Bezeichnung ok wird die mit dem Cursor ausgewählte Menüebene aktiviert. Die Aktivierung kann bewirken, dass eine Funktion initialisiert wird und/oder eine weitere Menüebene bzw. ein Menüunterebene angezeigt wird.

Die Tasten können sowohl mechanisch oder elektronisch oder durch Touch Screen Tasten realisiert sein. Des Weiteren ist die Bedieneinheit BE wie in Figur 1 dargestellt und erläutert, erfindungsgemäß beispielsweise mit einem optischen Näherungssensor NSO ausgestattet bzw. in die Bedieneinheit BE integriert - in Figur 3 mit der Bezeichnung BE(NSO) angedeutet.

Für das Ausführungsbeispiel sein angenommen, dass in der Anzeigeeinheit AZE mit Hilfe der Steuereinheit STE eine Menüebene (M) mit drei Menüs Menü M1..Menü M3 angezeigt wird. Die drei Menus können beispielsweise durch drei vermittlungstechnische Funktionen wie Anrufumleitung, Wahlwiederholung und Rückruf repräsentiert sein. Aus Menü1 bis Menü3 wird durch eine Person eine zugeordnete Menüebene bwz. Menüunterebene ausgewählt, wobei die Auswahl durch Betätigen der den Cursor steuernden Tasten erfolgt. Für das Ausführungsbeispiel sei angenommen, dass das Menü Menü2 ausgewählt ist - siehe Figur 2 und 3. Erfindungsgemäß wird bei Annäherung eines Objekts, im Ausführungsbeispiel ein Finger F einer Person, an das Bedienelement BE das erfindungsgemäße Verfahren eingeleitet - in Figur 3 durch einen mit F bezeichneten Pfeil angedeutet.

Bei einem optischen Näherungssensor NSO wird bei einem durch den Finger reflektierten optischen Signal bei Überschreiten eines vorgegebenen Empfangspegels ein Näherungssignal ns gebildet und an die Steuereinheit STE übermittelt. Da aktuell das Menü Menü2 ausgewählt ist - beispielsweise Anrufumleitung - wird durch die Steuereinheit STE die weitere bzw. zugeordnete Menüebene WM mit den drei Untermenüs Menü2.1..Menü3 ermittelt und eine entsprechende Anzeigeinformation ai gebildet und an die Anzeigeeinheit AZE übermittelt - siehe Figur 1. In der Anzeigeeinheit AZE wird die weitere Menüebene WM im Sinne einer Vorschau dargestellt, d.h. die weitere Menüebene WM wird solange dargestellt wie sich der Finger F im Annäherungsbereich des optischen Näherungssensors NSO befindet - in der Figur 3 durch die Bezeichnungen Menü2.1, Menü2,2 und Menü2.3 angedeutet. Wird der Finger F wieder aus dem Annäherungsbereich des optischen Näherungssensors NSO bewegt, so wird wieder die ursprüngliche Menüebene M mit den Menüs Menü1..Menü3 dargestellt - siehe Figur 2. Es kann daraufhin sofort ein anderes Menü Menü1..Menü3 ausgewählt werden - nicht dargestellt. Soll die im Sinne einer Vorschau angezeigte weitere Menüebene WM dauerhaft angezeigt werden, so wird mit dem Finger die Taste mit der ok- Bezeichnung gedrückt.

Alternativ kann die weitere Menüebene WM im Sinne einer Vorschau zusätzlich zur aktuellen Menüebene M mit den Menüs Menül..Menü3 angezeigt werden, sofern die Anzeigeeinheit AZE hierfür dimensioniert ist. Vorteilhaft ist hierbei, die Informationen der weitere Menüebene WM im Sinne einer Vorschau hinsichtlich Format und/oder Inhalt reduziert anzuzeigen. Hinsichtlich Format können die Informationen verkleinert oder verkürzt dargestellt werden. Der Inhalt der weiteren Menüebene WM kann beispielsweise dadurch reduziert werden, dass nur Schlagworte oder Kurzzeichen angegeben sind.

Das erfindungsgemäße Verfahren bzw. die Anordnung kann nicht nur in nachrichtentechnischen oder kommunikationstechnischen Einrichtungen, sondern kann in allen elektrischen Einrichtungen bzw. Geräten eingesetzt werden, bei denen Menüunterebenen oder Funktionsunterebenen oder Informationsunterebenen angezeigt werden können. Die erfindungsrelevanten Komponenten sind hierbei an die jeweiligen Menüs und weitere Menüebenen bzw. Menüunterebenen anzupassen.

## Patentansprüche

1. Verfahren zum Bedienen von elektrischen Geräten (EG,TE),
- bei dem durch zumindest ein Bedienelement (BE) in einer Menüebene (M) zumindest eine weitere Menüebene (WM) ausgewählt und an einer Anzeige (AZE) angezeigt werden kann,
**dadurch gekennzeichnet,**
- **dass** bei einer Annäherung eines Objekts (F) an das mit einem Näherungssensor (NS) ausgestatteten Bedienelement (BE) oder Berühren des mit einem Berührungssensor (BS) ausgestatteten Bedienelements (BE) durch ein Objekt (F) in der Anzeige (AZE) im Sinne einer Vorschau die durch das Bedienelement (BE) ausgewählte, weitere Menüebene (WM) angezeigt wird.

2. Verfahren nach Anspruch 1,
**dadurch gekennzeichnet,**
**dass** im Sinne einer Vorschau die durch das Bedienelement (BE) auswählbare weitere Menüebene (WM) hinsichtlich Format und/oder Inhalt reduziert angezeigt wird.

3. Verfahren nach Anspruch 1 oder 2, **dadurch gekennzeichnet, dass** bei einem durch zumindest eine optische Sende-/ Empfangseinheit oder eine Ultraschall- Sende-/ Empfangseinheit ausgestalteten Näherungssensor (NSO) ein jeweils durch die optische Sendeeinheit ausgesandtes optisches Signal oder durch die Ultraschall- Sendeeinheit ausgesandtes Ultraschallsignal durch Annäherung eines Objekts (F) an die Sende-/ Empfangseinheit das reflektierte optische Signal oder Ultraschallsignal im Empfänger erfasst wird, und dass durch das Erfassen eine weitere Menüebene (WM) ausgewählt wird.

4. Verfahren nach einem der Ansprüche 1 oder 2, **dadurch gekennzeichnet,**
**dass** bei einem kapazitiven Näherungssensor (NS) durch Annäherung eines Objekts (F) eine Oszillatorschwingung beeinflusst wird, und dass die Beeinflussung erfasst und eine weitere Menüebene (WM) ausgewählt wird.

5. Verfahren nach einem der Ansprüche 1 bis 4, **dadurch gekennzeichnet,**
**dass** bei einem als resistiven oder kapazitiven Touch Screen oder als Piezosensor ausgebildeten Berührungssensor (BS) durch Berühren eines Objekts (F) die Berührung erfasst wird, und durch das Erfassen eine weitere Menüebene ausgewählt wird.

6. Verfahren nach einem der vorhergehenden Ansprüche, **dadurch gekennzeichnet,**
**dass** im Sinne einer Vorschau die weitere Menüebene (WM) solange in der Anzeige (AZE) angezeigt wird, solange sich ein Objekt (F) im Annäherungsbereich des Näherungssensors (NS) befindet oder der Berührungssensor (BS) berührt wird.

7. Verfahren nach einem der vorhergehenden Ansprüche, **dadurch gekennzeichnet,**
**dass** nachdem die weitere Menüebene (WM) in Sinne einer Vorschau angezeigt wird, das Bedienelement (BE) betätigt und die ausgewählte weitere Menüebene (MW) im Sinne einer Initialisierung der angezeigten Funktion oder einer weiteren Auswahl einer zusätzlichen, weiteren Menüebene angezeigt wird.

8. Verfahren nach einem der vorhergehenden Ansprüche, **dadurch gekennzeichnet,**
**dass** eine Menüebene (M) oder weitere Menüebene (WM) durch eine alpha-numerische und/oder graphische Darstellung in der Anzeige (AZE) repräsentiert ist.

9. Anordnung zum Bedienen eines elektrischen Geräts (EG, TE) mit mindestens einem Bedienelement (BE), wobei durch ein Bedienelement (BE) in einer Menüebene (M) eine weitere Menüebene (WM) ausgewählt und an einer Anzeige (AZE) angezeigt werden kann,
**dadurch gekennzeichnet,**
**dass** das Bedienelement (BE) für eine Erfassung einer Annäherung eines Objekts (F) mit einem Näherungssensor (NS) oder für die Erfassung einer Berührung durch ein Objekt (F) mit einem Berührungssensor (BS) ausgestattet ist,
**dass** eine Steuer-/Anzeigeeinheit (STE,AZE) zur Anzeige einer im Sinne einer Vorschau der durch das Bedienelement (BE) ausgewählten, weiteren Menüebene (WM) bei einer Erfassung einer Annäherung oder Berührung vorgesehen ist.

10. Anordnung nach Anspruch 9, **dadurch gekennzeichnet,**
**dass** die Steuer-/Anzeigeeinheit (STE, AZE) derart ausgestaltet ist, dass im Sinne einer Vorschau die weitere Menüebene (WM) hinsichtlich Format und/oder Inhalt reduziert angezeigt wird.

11. Anordnung nach Anspruch 9 oder 10, **dadurch gekennzeichnet,**
**dass** der Näherungssensor (NSO) durch eine optische oder Ultraschall- Sende-/Empfangseinheit oder durch einen kapazitiven Näherungssensor (NS) realisiert ist.

12. Anordnung nach einem der Ansprüche 9 oder 10, **dadurch gekennzeichnet,**
**dass** der Berührungssensor (BS) durch einen resistiven oder kapazitiven Touch Screen oder Piezosensor realisiert ist.

13. Anordnung nach einem der Ansprüche 9 bis 12, **dadurch gekennzeichnet,**
**dass** das Bedienelement (BE) als elektronisches oder mechanisches Schaltelement ausgebildet ist.

14. Anordnung nach Anspruch 13, **dadurch gekennzeichnet,**
**dass** das Schaltelement zusammen mit dem Näherungssensor (NS) oder dem Berührungssensor (BS) realisiert ist, wobei die Sensoren in Betätigungsrichtung vor dem Schaltelement angeordnet sind.

15. Anordnung nach einem der Ansprüche 9 bis 14, **dadurch gekennzeichnet,**
**dass** das elektrische Gerät (GE) durch ein drahtgebundenes oder drahtloses Kommunikationsgerät (TE) realisiert ist und dass zumindest ein Bedienelement (BE) nach einem der Ansprüche 9 bis 14 im Sinne einer Vorschau der durch das Bedienelement ausgewählten, weiteren Menüebene (WM) vorgesehen ist.

## Claims

1. Method for operating electric devices (EG, TE)
- where at least one additional menu layer (WM) can be selected in a menu layer (M) and displayed on a display unit (AZE) by means of at least one control element (BE),
**characterized in that**
- when an object (F) approaches the control element (BE) that is provided with a proximity sensor (NS) or when an object (F) touches the control element (BE) that is provided with a tactile sensor (BS), the additional menu layer (WM), selected by means of the control element (BE), is displayed in the display unit (AZE) as a preview.

2. Method according to Claim 1. **characterized in that** the additional menu layer (WM) that is selectable by means of the control element (BE) as a preview is displayed in a reduced manner with regard to format and/or content.

3. Method according to Claim 1 or 2, **characterized in that** where a proximity sensor (NSO) is realized by at least one optical transmitting/receiving unit or an ultrasound transmitting/receiving unit, an optical signal is transmitted in each case by the optical transmitting unit or an ultrasound signal is transmitted by the ultrasound transmitting unit when an object (F) approaches the transmitting/receiving unit and the reflected optical signal or ultrasound signal is detected in the receiver, and **in that** an additional menu layer (WM) is selected by means of said detection.

4. Method according to one of Claims 1 or 2, **characterized in that** in the case of a capacitive proximity sensor (NS), the approaching of an object (F) influences a vibration, and **in that** the influencing is detected and an additional menu layer (WM) is selected.

5. Method according to one of Claims 1 to 4, **characterized in that** where a tactile sensor (BS) is realized as a resistive or capacitive touch screen or a piezo sensor, when an object (F) touches, the touching is detected, and an additional menu layer is selected by means of the detection.

6. Method according to one of the preceding Claims, **characterized in that** the additional menu layer (WM) is displayed in the display unit (AZE) as a preview as long as an object (F) is situated in the proximity region of the proximity sensor (NS) or the tactile sensor (BS) is touched.

7. Method according to one of the preceding Claims, **characterized in that** after the additional menu layer (WM) has been displayed as a preview, the control element (BE) is actuated and the selected additional menu layer (MW) is displayed as an initializing of the displayed function or as an additional selection of yet another additional menu layer.

8. Method according to one of the preceding Claims, **characterized in that** a menu layer (M) or additional menu layer (MW) is represented by an alphanumeric and/or graphic representation in the display unit (AZE).

9. Arrangement for operating an electric device (EG, TE), said arrangement having at least one control element (BE), wherein an additional menu layer (WM) can be selected in a menu layer (M) and displayed on a display unit (AZE) by means of a control element (BE), **characterized in that** the control element (BE) is provided with a proximity sensor (NS) for detecting the approach of an object (F) or with a tactile sensor (BS) for detecting the touch of an object (F), **in that** a control/display unit (STE, AZE) is provided for displaying an additional menu layer (WM), selected by means of the control element (BE), as a preview in the event of detection of an approach or touch.

10. Arrangement according to Claim 9, **characterized in that** the control/display unit (STE, AZE) is realized in such a manner that the additional menu layer (WM) is displayed as a preview in a reduced manner with regard to format and/or content.

11. Arrangement according to Claim 9 or 10, **characterized in that** the proximity sensor (NSO) is realized by an optical or ultrasound transmitting/receiving unit or by a capacitive proximity sensor (NS).

12. Arrangement according to one of Claims 9 or 10, **characterized in that** the tactile sensor (BS) is realized by a resistive or capacitive touch screen or piezo sensor.

13. Arrangement according to one of Claims 9 to 12, **characterized in that** the control element (BE) is in the form of an electronic or mechanical switching element.

14. Arrangement according to Claim 13, **characterized in that** the switching element is realized together with the proximity sensor (NS) or the tactile sensor (BS), wherein the sensors are located upstream of the switching element in the direction of actuation.

15. Arrangement according to one of Claims 9 to 14, **characterized in that** the electric device (GE) is realized by a wire-bound or wireless communication device (TE) and **in that** at least one control element (BE) according to one of Claims 9 to 14 is provided as a preview of the additional menu layer (WM) selected by the control element.

## Revendications

1. Procédé de commande d'appareils électriques (EG, TE),
- avec lequel au moins un élément de commande (BE) dans un niveau de menu (M) permet de sélectionner au moins un autre niveau de menu (WM) et de l'afficher sur un affichage (AZE), **caractérisé en ce que**
- lorsqu'un objet (F) s'approche de l'élément de commande (BE) équipé d'un détecteur de proximité (NS) ou lorsqu'un objet (F) entre en contact avec l'élément de commande (BE) équipé d'un détecteur de contact (BS), l'autre niveau de menu (WM) sélectionné par l'élément de commande (BE) est affiché dans l'affichage (AZE) en vue d'une prévisualisation.

2. Procédé selon la revendication 1 **caractérisé en ce que**, en vue d'une prévisualisation, l'autre niveau de menu (WM) sélectionnable par l'élément de commande (BE) est affiché de manière réduite en ce qui concerne son format et/ou contenu.

3. Procédé selon la revendication 1 ou 2, **caractérisé en ce que**, dans le cas d'un détecteur de proximité (NSO), pourvu au moins d'une unité d'émission-réception optique ou d'une unité d'émission-réception ultrasonore et générant soit un signal optique émis par l'unité d'émission optique, soit un signal ultrasonore émis par l'unité d'émission ultrasonore, lorsqu'un objet (F) s'approche de l'unité d'émission-réception, le signal réfléchi optique ou ultrasonore est détecté dans le récepteur, et **en ce qu'**un autre niveau de menu (WM) est sélectionné par le biais de la détection.

4. Procédé selon l'une des revendications 1 ou 2, **caractérisé en ce que**, dans le cas d'un détecteur de proximité capacitif (NS), une oscillation d'un oscillateur est influencée par l'approche d'un objet (F), et **en ce que** l'influence est détectée et qu'un autre niveau de menu (WM) est sélectionné.

5. Procédé selon l'une des revendications 1 à 4, **caractérisé en ce que**, dans le cas d'un détecteur de contact (BS) conçu sous la forme d'un écran tactile résistif ou capacitif ou sous la forme d'un capteur piézoélectrique, le contact par un objet (F) est détecté et un autre niveau de menu est sélectionné par le biais de la détection.

6. Procédé selon l'une quelconque des revendications précédentes, **caractérisé en ce que**, en vue d'une prévisualisation, l'autre niveau de menu (WM) est affiché dans l'affichage (AZE) tant qu'un objet (F) se trouve dans la zone de détection du détecteur de proximité (NS) ou tant que le détecteur de contact (BS) est touché.

7. Procédé selon l'une quelconque des revendications précédentes, **caractérisé en ce que**, après que l'autre niveau de menu (WM) a été affiché en vue d'une prévisualisation, l'élément de commande (BE) est actionné et l'autre niveau de menu (MW) sélectionné est affiché en vue d'une initialisation de la fonction affichée ou en vue d'une autre sélection d'un autre niveau de menu supplémentaire.

8. Procédé selon l'une quelconque des revendications précédentes, **caractérisé en ce que**, un niveau de menu (M) ou un autre niveau de menu (WM) représenté apparaît dans l'affichage (AZE) sous forme d'une représentation alphanumérique et/ou graphique.

9. Dispositif de commande d'un appareil électrique (EG, TE) équipé au moins d'un élément de commande (BE), un élément de commande (BE) dans un autre niveau de menu (M) permettant de sélectionner un autre niveau de menu (WM) et de l'afficher sur un afficheur (AZE),**caractérisé en ce que** l'élément de commande (BE) est équipé d'un détecteur de proximité (NS) permettant une détection d'une approche d'un objet (F) ou d'un détecteur de contact (BS) permettant la détection d'un contact par un objet (F), **en ce qu'**il est prévu une unité de commande-affichage (STE, AZE) à des fins d'affichage d'un autre niveau de menu (WM) sélectionné en vue d'une prévisualisation par l'élément de commande (BE) en cas d'une détection d'une approche ou d'un contact.

10. Dispositif selon la revendication 9, **caractérisé en ce que** l'unité de commande-affichage (STE, AZE) est conçue de manière telle que, en vue d'une prévisualisation, l'autre niveau de menu (WM) soit affiché de manière réduite en ce qui concerne son format et/ou contenu.

11. Dispositif selon la revendication 9 ou 10, **caractérisé en ce que** le détecteur de proximité (NSO) est réalisé soit par une unité d'émission-réception optique ou ultrasonore, soit par un détecteur de proximité capacitif (NS).

12. Dispositif selon l'une des revendications 9 ou 10, **caractérisé en ce que** le détecteur de contact (BS) est réalisé soit par un écran tactile résistif ou capacitif, soit par un capteur piézoélectrique.

13. Dispositif selon l'une des revendications 9 à 12, **caractérisé en ce que** l'élément de commande (BE) est conçu sous forme d'un élément d'enclenchement électronique ou mécanique.

14. Dispositif selon la revendication 13, **caractérisé en ce que** l'élément d'enclenchement est réalisé conjointement avec le détecteur de proximité (NS) ou le détecteur de contact (BS), les détecteurs étant disposés devant l'élément d'enclenchement dans la direction d'actionnement.

15. Dispositif selon l'une des revendications 9 à 14, **caractérisé en ce que** l'appareil électrique (GE) est réalisé par un appareil de communication (TE) filaire ou sans fil et **en ce qu'**il est prévu au moins un élément de commande (BE) selon l'une des revendications 9 à 14 en vue d'une prévisualisation de l'autre niveau de menu (WM) sélectionné par l'élément de commande.
